# DEMANDE DE BREVET EUROPEEN

(11) **EP 1 240 825 A1**
(43) Date de publication de la demande: **18.09.2002**
(21) Numéro de dépôt: 01380001.6
(22) Date de dépôt: 16.03.2001
(51) Int. Cl.: A01K 97/24

(54) **Dispositif pour récupérer les leurres de pêche pris par leurs hameçons au fond de l'eau**

(71) Demandeur: Milcendeau, Alain, 85190 Beaulieu sous La Roche (FR); Sarradell, Alain Patrick, 85000 La Roche/Yon (FR)
(72) Inventeur: Milcendeau, Alain, 85190 Beaulieu sous La Roche (FR); Sarradell, Alain Patrick, 85000 La Roche/Yon (FR)

(57) **Abrégé**

L'invention concerne un dispositif coulissant permettant de récupérer sans les détruire, les leurres de pêche tels que : les poissons nageurs à bavette, les cuillers lourdes et les cuillers munies de mitraillettes.

Il est constitué d'un manchon lesté (1) présentant une large ouverture (2) dans sa partie inférieure dans laquelle vient se coiffer le leurre. Dans la cheminée supérieure (3) un bloqueur articulé (5) vient coincer et arracher le leurre de son emprise quand l'utilisateur exerce sur le filin (4) une traction énergique.

Le dispositif de l'invention est particulièrement destiné à récupérer les leurres de pêche aux carnassiers de mer ou d'eau douce.

## Description

La présente invention concerne un dispositif coulissant destiné à récupérer sans les détruire, les leurres de pêche tels que : les poissons nageurs à bavette (genre «Rapala»), les cuillers lourdes, les cuillers lourdes montées à l'extrémité d'une «mitraillette».

La pêche aux carnassiers en mer nécessite l'utilisation de leurres comme ceux cités ci-dessus et munis d'hameçons. Le fond de l'eau étant tapissé d'obstacles, roches, filets, épaves, cordages et algues, la dextérité des pêcheurs n'élimine pas les nombreux risques d'accrochages où les leurres sont perdus à jamais.

Le dispositif selon l'invention permet de récupérer sans les détruire, les leurres accrochés au fond de l'eau. II comporte en effet selon une première caractéristique, un manchon présentant une large ouverture conique dans sa partie inférieure dans laquelle vient se coiffer le leurre, prolongée par une cheminée cylindrique de dégagement et un bloqueur actionné par un filin, formant levier exerçant une pression sur le leurre pour le coincer.

Dans son application, quand le leurre est accroché, le dispositif est engagé sur la ligne de pêche de celui-ci (ligne tendue proche de la verticale), par une fente prévue à cet effet. Placer le corps de ligne dans la fente servant de guide fil en ouvrant le bloqueur. C'est en prenant le filin à la main que le bloqueur se ferme et que le dispositif est prêt à fonctionner. Tout en maintenant la ligne tendue et en contrôlant le filin, laisser descendre énergiquement le dispositif jusqu'au leurre. Celui-ci étant coiffé par le manchon du dispositif, il suffit d'exercer une traction sur le filin qui a pour effet de bloquer le leurre et de le libérer de son emprise par arrachement de l'hameçon.
Selon des modes particuliers de réalisation :
- La forme extérieure du manchon peut se présenter différemment, cylindrique, conique ou ovoïde, sans altérer le fonctionnement du dispositif.
- La fixation du filin sur le bloqueur peut être articulée sur un axe.
- Le filin en mono filament nylon de pêche 190/100e (150 Kilogrammes) peut être prévu en câble inox torsadé souple.
- Le positionnement de la fente permettant le passage du fil du leurre dans la manchon peut être décalé de plusieurs degrés par rapport à l'axe de la cloche.

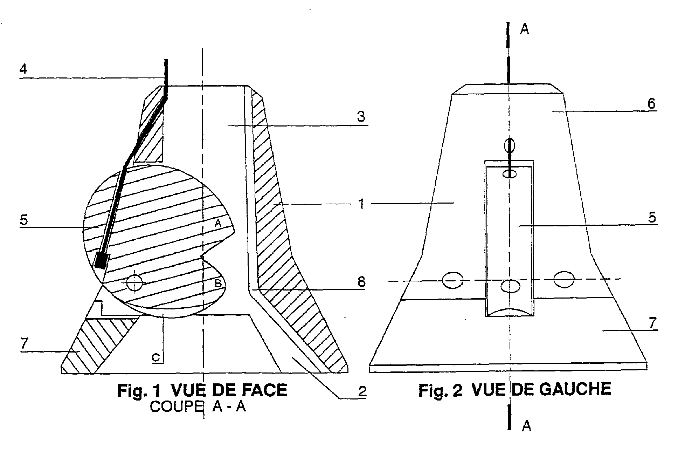

Les dessins annexés illustrent l'invention :
La planche A représente le principe de l'invention en cinq dessins.
La planche B représente l'ensemble du dispositif
   -La figure 1 vue de face en coupe du dispositif de l'invention.
   -La figure 2 vue de gauche du dispositif de l'invention.

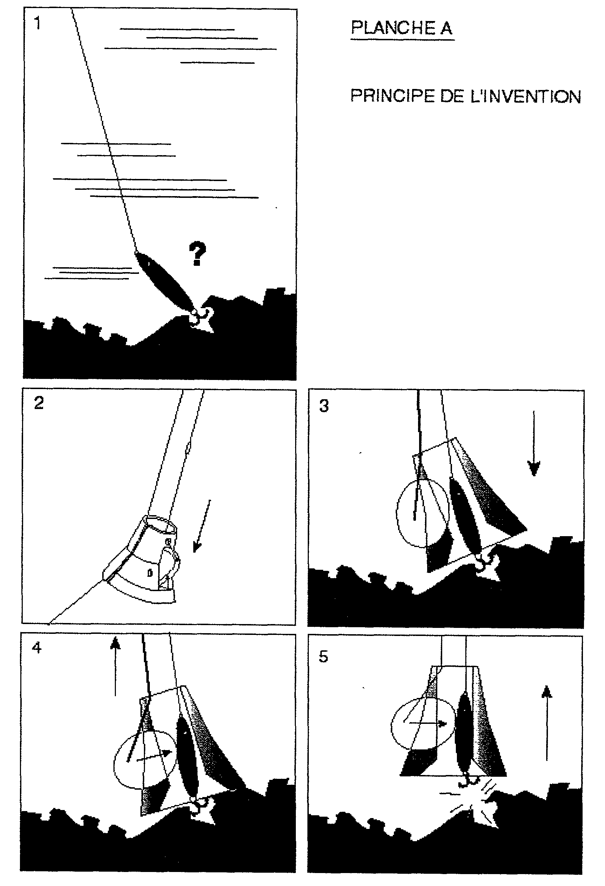

   -La figure 3 vue de dessous du dispositif de l'invention.
   -La figure 4 vue de dessus du dispositif de l'invention.

En référence à ces dessins, le dispositif comporte un manchon tronconique (1) présentant une large ouverture conique dans sa partie inférieure (2) dont l'angle est étudié pour admettre des leurres de tailles moyennes. Le manchon est constituée de deux parties : la structure (6) et le lest (7). L'ouverture inférieure est prolongée par une cheminée cylindrique de dégagement (3) débouchant sur la partie supérieure. Dans la cloche, un bloqueur articulé (5) en forme de came, commandé par un filin (4) vient coincer le leurre pour le dégager.
Le bloqueur fait office de levier (5) et sa forme par rapport à l'articulation est telle qu'une traction énergique sur le filin exercée par l'utilisateur est démultipliée et permet une prise efficace du leurre.
La forme du bloqueur est caractéristique du dispositif. En effet le bloqueur comporte une entaille qui forme deux lèvres (A et B) ce qui permet au dispositif de fonctionner avec des cuillers de tailles moyennes et des poissons nageurs plus importants, à condition que ces derniers soient en matière solide.
La fente prévue pour le passage du bas de ligne du leurre, est large de 1 millimètre.
La rainure intérieure (8) placée dans l'axe longitudinal du dispositif sert de guide fil pour atteindre le leurre sans difficulté.
L'ensemble du dispositif est lourd, il pèse 1,5 kilogramme, ce qui lui permet d'avoir une inertie suffisante pour venir coiffer le leurre profondément.
À titre d'exemple non limitatif pour une application concernant les leurres à carnassiers de mer, le dispositif aura des dimensions extérieures de l'ordre de 125 millimètres de diamètre et de 125 millimètres pour sa hauteur.
Le dispositif selon l'invention est particulièrement destiné à la récupération des leurres pris par leurs hameçons au fond de l'eau. L'utilisation du dispositif est pleinement efficace jusqu'à trente mètres de profondeur.

## Revendications

1. Dispositif pour décrocher les leurres pris par leurs hameçons au fond de l'eau à des algues, roches, filets ou cordages. Ce dispositif est **caractérisé en ce qu'**il comporte un manchon tronconique (1) présentant une large ouverture conique dans sa partie inférieure (2) dans lequel vient se coiffer le leurre, prolongée par une cheminée cylindrique (3) de dégagement, et un bloqueur (5) en forme de came articulée formant levier, exerce une pression sur le leurre pour le coincer lorsque la came est actionnée par l'utilisateur à l'aide du filin (4) prévu à cet effet.

2. Dispositif selon la revendication 1 **caractérisé en ce que** le manchon est constituée de deux parties : la partie supérieure formant la structure (6) en matière synthétique moulée, et le lest en plomb (7) fixé sur les deux tiers de la circonférence de la partie inférieure, épousant parfaitement la structure.

3. Dispositif selon la revendication 1 ou la revendication 2 **caractérisé en ce que** le manchon (1) comporte une rainure intérieure (8) placée dans l'axe et opposée au lest, sur toute la hauteur servant de guide au manchon lorsque celui-ci descend par le fil du leurre.

4. Dispositif selon la revendication 1 ou la revendication 2 **caractérisé en ce que** le manchon (1) comporte une fente (9) permettant le passage du fil du leurre quand le manchon est engagée sur celui-ci.

5. Dispositif selon la revendication 1 **caractérisé en ce que** le bloqueur (5) de forme ovale comporte une entaille qui forme deux lèvres (A,B), celles-ci permettent de saisir des leurres de différentes formes. Le bloqueur est évidé (C) sur la largeur au niveau de la lèvre inférieure.

6. Dispositif selon la revendication 1 ou la revendication 5 **caractérisé en ce que** le bloqueur (5) est actionné par un filin (4). Ce filin passant par un orifice au travers le manchon (1) supporte celle-ci en équilibre horizontal.
